# EUROPEAN PATENT SPECIFICATION

(11) **EP 1 026 232 B1**
(45) Date of publication and mention of the grant of the patent: **19.01.2005**
(21) Application number: 00200273.1
(22) Date of filing: 26.01.2000
(51) Int. Cl.: C12G 1/026

(54) **Mixing tank for fluids containing suspended solid bodies, in particular musts with grapes to be macerated**
Tank zum mischen von Flüssigkeiten mit festen suspendierten Partikeln, insbesondere zur Mazeration von Traubenmosten
Reservoir melangeur pour liquides contenant des particules solides en suspension, en particulier pour mouts de raisins devant être macérés

(30) Priority: 29.01.1999 IT TV990013
(43) Date of publication of application: 09.08.2000
(73) Proprietor: VELO Spa, I-31030 Altivole, Treviso (IT)
(72) Inventor: Velo, Antonio, 31030 Caerano San Marco (Treviso) (IT)
(74) Representative: Dragotti, Gianfranco

(56) References cited:
- EP-A- 0 056 610
- EP-A- 0 149 202
- EP-A- 0 337 060
- EP-A- 0 807 679
- DE-A- 2 257 956
- DE-U- 8 816 449

## Description

The invention relates in general to those tanks inside which fluids containing suspended solid bodies are kept stirred so as to provide them with more uniform properties.

More particularly the invention relates to tanks used in the wine-making sector for the production of wine.

In these tanks the skins of the pressed grapes are left to macerate together with their must so as to provide the latter with the desired organoleptic properties: as is known, indeed, the macerated skins release into the must substances which help to determine the colour, the flavour, the bouquet and other properties of the wine.

Furthermore, the aforementioned tanks also allow controlled fermentation of the must to be obtained because they can ensure a uniform temperature thereof and distribute in a homogeneous manner the yeasts inside the liquid mass.

In the wine-making sector the abovementioned tanks are referred to by different names (for example, fermenters, macerators, fermenting tuns, vinification vats, etc.); in the remainder of this description and in the accompanying claims, for the sake of simplicity, the sole term "fermenter" will be used, without implying any limitation thereby.

The above having been stated, it may be said that the fermenters currently used essentially consist of a horizontal-axis cylindrical container inside which means for mixing the must and the grape skins are located: in this way a more homogeneous contact between them is ensured and at the same time the skins are prevented from accumulating on the free surface of the must, floating thereon so as to form the so-called marc.

From an operational point of view, the fermenters must be able to perform some important functions, including stirring of the must referred to above, and draining thereof with subsequent removal of the marc.

As regards the first function, it is important that the mixing means previously considered have an action which is uniform throughout the mass contained inside the fermenter and also such as not to damage the marc; indeed, if the action of these means were to cause breaking-up of the skins, the latter could release into the must substances capable of altering the organoleptic properties of the must in an unpredictable manner.

As regards the second function, it relates to discharging of the must and the marc; by performing these two operations separately, the liquid may be removed without any solid bodies therein, while the fermenter is then cleaned subsequently so as to remove the skins and the grape pips.

At present there exist various fermenters which perform the abovementioned functions; for example, some are known wherein the external cylindrical casing is able to rotate about its axis (in a manner similar to that of a concrete mixer) and which internally have an Archimedean screw with the function of feeding the marc deposited on the bottom of the empty tank, towards an outlet opening.

Another solution consists of fermenters which internally have a rotating shaft provided with special directable blades; depending on the direction of rotation of the shaft, the blades are directed so as to perform mixing of the must or discharging of the marc.

In both cases the fermenters are structurally and/or functionally fairly complex and therefore they are not convenient either from an operational and a cost-related point of view.

EP 807679, EP 56610 and DE 8816449U describe similar fermenten.

The present invention aims to remedy this situation; it has therefore has the object of providing a tank able to overcome the drawbacks of the state of the art mentioned above.

This object is achieved by a tank, whose characterising features are claimed at the end of this description.

In order to made the invention better understood, a preferred and non-exclusive embodiment thereof is described hereinbelow and illustrated in the accompanying drawings wherein respectively:

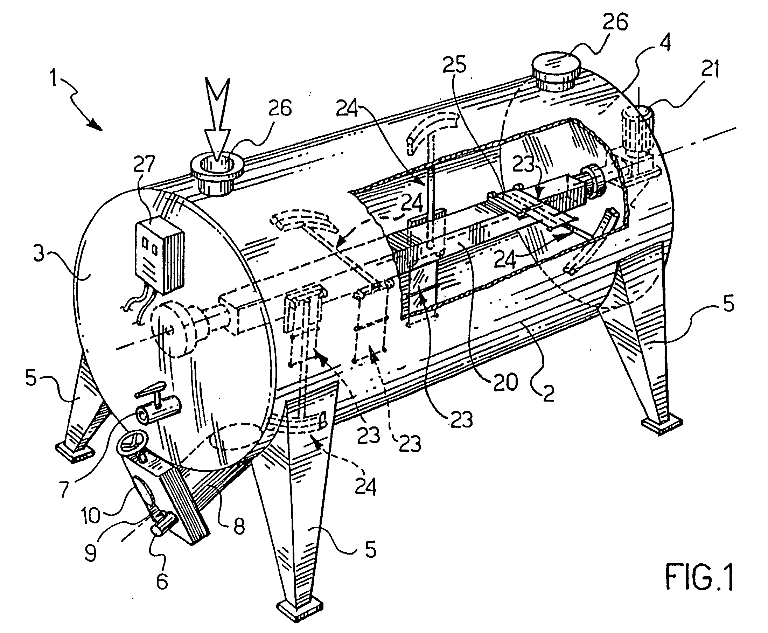

- Fig. 1 shows a perspective view, with a part removed, of a fermenter according to the invention;

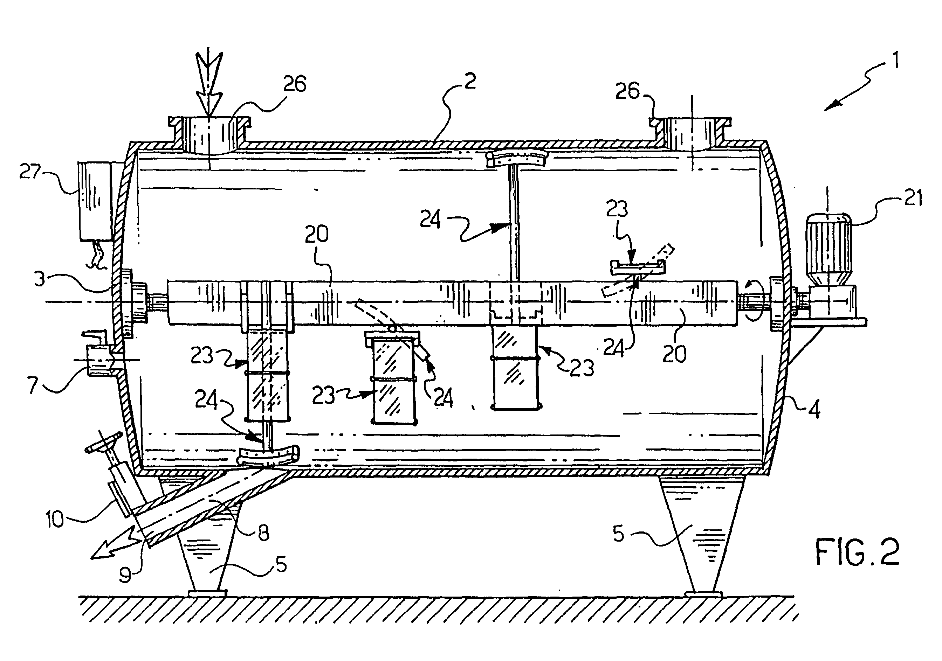

- Fig. 2 shows a longitudinally sectioned view of the same fermenter;
- Fig. 3 shows a detail of the fermenter according to the preceding figures;
- Figs. 4a, 4b, 4c, 4d show a schematic view of the inside of the fermenter already referred to, in respective operating conditions.

In the light of the drawings considered above, the example of a fermenter according to the invention has been indicated in its entirety by 1.

Said fermenter consists of a stainless-steel cylindrical casing 2, closed at its ends by a front section 3 and a rear section 4, and supported in horizontal position by a series of fixed feet 5.

The tank 1 is provided with two valves 6 and 7 located at respective heights from the ground and intended to drain the must, the first of which is situated opposite a channel 8 for collecting the marc; this channel has at the front an opening 9 which is closed by a gate 10.

The cylindrical casing 2 has mounted inside it, rotatably and coaxially therewith, a shaft 20 with a polygonal cross-section, which in this case is also square; rotation of this shaft is performed by a motor 21 located outside the fermenter.

A series of mixer members 23 and scraper members 24 are mounted on the shaft 20 and are now considered in detail.

The former consist of two panels 23a, 23b hinged together so as to form an articulated structure, where the first of said panels is in turn hingeably mounted on the outside of the shaft 20, since the latter has a square cross-section, mounting of the mixer members is undoubtedly easier and more stable compared to the case of a shaft with a circular cross-section.

Basically it may be said that the panels articulated together form a kind of flexible vane which is able to rotate about the shaft 20, as it will be seen more clearly below.

A respective scraper member 24 is also located opposite each mixer member 23.

Said scraper member consists of a rod 24a fixed to the shaft 20 tangentially with respect thereto; in this case also it is possible to note that the quadrangular cross-section of the shaft facilitates mounting of the rod tangential thereto.

The end of the rod has, mounted on it, a curved support 24b oriented in an inclined manner with respect to the generatrices of the cylindrical casing 2 and onto which a rubber brush 24c is applied; the latter makes contact with the internal surface of the casing 2, in a similar manner to the contact between the wiper blade and windscreen of a car.

As can be seen from the drawings, the rods 24a of the scraper members 24 are arranged along the shaft 20 staggered at 90° with respect to each other.

Finally, the fermenter of this example is completed by two manholes 26 and a control unit 27 containing the various controls for operation thereof, which occurs in the manner described below.

The must with the pressed grapes is introduced inside the fermenter 1 through the manholes 26; following which the shaft 20 is rotated by setting the operating parameters on the control unit 27. In this connection it should be pointed out that the speed of rotation and the duration for which said speed is maintained will depend on the individual circumstances and will also vary according to the type of wine to be produced; consequently the control unit is also provided with timer means so that the working cycle of the fermenter may be set.

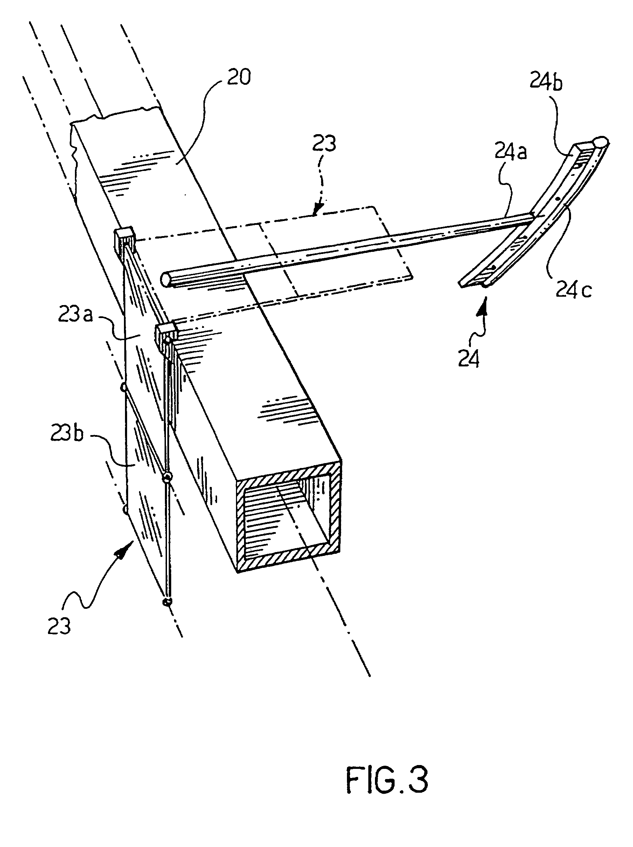

The resistance offered by the must and the marc during rotation of the shaft 20 is such that the mixer members 23 are swung back around the hinging axis of the associated panel 23a, until they stop against the shaft 24a of the corresponding scraper member 24; this situation is shown in Figure 3 where a broken line indicates the position assumed by a mixer member 23, resting against the adjacent scraper member 24 on account of the resistance referred to.

It may be easily understood that in this condition each mixer member 23 assumes a stable configuration (that could be considered rigid as opposed to a flexible configuration in the rest condition), while its stirring action on the must and the marc is very effective owing to its flattened form which offers an ample resistance cross-section from the fluid dynamics point of view.

It may also be noted that, during this step, the scraper members 24 contribute, albeit to a lesser extent than the mixer members, to stirring of the fluid mass present in the fermenter.

Once maceration of the grape skins has been completed, the must is drained; this operation is performed by opening the valve situated at a higher level.

It is important to point out that, during this step, the grape pips which do not float on the must, as does the marc, accumulate inside the collection channel 8; they may be discharged at any time by opening the bottom valve 6. The possibility of separate removal of the grape pips is a further advantage of the fermenter according to the invention, avoiding contamination of the must by said pips with the consequent risk of modification of its taste.

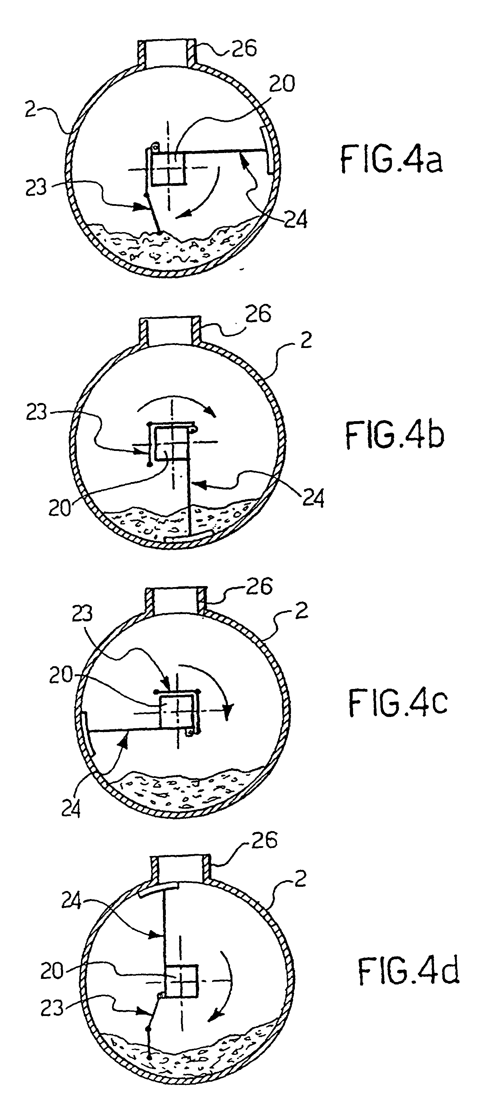

Once draining of the must has been completed, the "dried" marc deposited on the bottom of the cylindrical casing 2 is removed by rotating the shaft 20 (see Figs. 4a-4d) in the direction opposite to that performed during the preceding mixing step.

In the course of this operation the mixer members 23 are not pushed (by the must) against the scraper members 24, but instead tend to be folded so that the panels 23a, 23b are arranged around the shaft as though they were enveloping it; consequently their action becomes negligible compared to that of the scraper members which, with the subsequent passes, clean the internal surface of the cylindrical casing 2 conveying the marc towards the collection channel 8.

These effects are due to the fact that they are inclined, as mentioned above, with respect to the generatrices of the cylindrical casing; it should also be pointed out that the direction of rotation of the shaft must be co-ordinated with this inclination so as to obtain the desired effect of pushing the marc towards the front end section 3 of the fermenter.

The marc is then discharged by opening the gate 10 which closes the opening 9.

From what has been described hitherto it may be understood how the invention achieves the object underlining it.

The functions of mixing the must with the marc and the subsequent discharging thereof are in fact performed such that the drawbacks encountered in the state of the art are overcome.

As already mentioned, the mixing action performed by the members 23 is particularly effective; this is attributable firstly to their broad shape and their movement, which allows a thrust to be exerted on the fluid in a direction mainly tangential with respect to the cylindrical casing.

Also, the 90° staggered arrangement with which these members together with the scraper members 24 are mounted on the shaft 20, contributes favourably to render uniform the mixing action of the fluid mass.

It should be noted moreover that the shape of the mixing members 23 is such that during mixing of the must, they do not have sharp edges or corners which may cut or damage in any way the skins of the grapes with which they come into contact; this does not occur, in those known fermenters where the must stirring vanes are configured in a manner similar to those of helical screws.

As regards, moreover, discharging of the marc, this operation does not result in major structural and/or functional complications for the fermenter.

It is indeed performed by the scraper members 24 which are mounted on the same shaft 20 as the mixer members 23: the removal of the marc therefore does not require external operations, except for actuation of the shaft 20 which is performed by the user via the control unit 27.

As has been seen, in the fermenter according to the invention the solid bodies which do not float may be expelled separately through the collection channel 8.

This possibility also arises from the fact that, during stirring of the must, these bodies (in particular the grape pips) are deposited on the bottom of the cylindrical casing 2 and are pushed by the scraper members 24 towards the collection channel 8, similar to what happens for the marc during discharging from the fermenter.

As was seen with reference to the preceding example, the various components according to the invention which contribute to obtaining the results mentioned above, are simple to manufacture and therefore low-cost.

In this connection it must be pointed out how the measure of designing the shaft 20 with a polygonal and in particular a square or rectangular cross-section favours the mounting thereon of the various mixer and scraper members; in fact, the flat surfaces which define the shaft form optimum surfaces for securing, in a permanent or removable manner (by means of welding or other systems), these members onto the outside surface thereof. It should be pointed out that the possibility of having a shaft with a non-circular cross-section also depends on the fact that the speeds of rotation involved for this application are not high.

It should be noted, moreover, that the mounting of the mixer members 23 and the scraper members 24 on the outside of the shaft 20 avoids having to provide the latter with openings for receiving these elements, which could weaken the structure thereof and produce dangerous interstices giving rise to harmful infiltrations. In other words, it may be stated that with the preferred embodiment suggested here it is possible to provide a hollow shaft (i.e. of the tubular type) without any possible points where the must could seep inside creating problems which can be easily imagined.

Obviously variations of the invention with respect to that described hitherto are also possible.

For example, it is obvious that the square or rectangular cross-section of the shaft 20 allows the staggering at 90°, of the mixer members 23 and the scraper members 24, as mentioned; it is obvious, however, that by changing the polygonal shape of the shaft cross-section, the number and the staggering of these members also changes.

The latter furthermore may be fixed to the shaft in the most suitable manner depending on the circumstances; consequently it is possible to envisage variants in which the members are secured in a removable manner (for example, by means of bayonet joints or the like) so as to allow the replacement thereof in the event of breakage or other cases where they fixed permanently by means of welds, rivets, etc.

A further variation of the invention to be taken into consideration is that of constructing the mixer members 23 not in the form of rigid panels articulated with each other, but with strips of flexible material of suitable rigidity; it is possible to imagine, for example, strips of rubber of suitable thickness strong enough to mix the fluid mass in the fermenter and at the same sufficiently flexible to not affect discharging of the marc.

It must also be pointed out that the tank formed by the cylindrical casing and by the end sections 3, 4 may also be provided with means for regulating the temperature of the fluid inside it.

It can be easily understood that it is possible to envisage the most widely varying solutions for this purpose; one of these is that of providing an interspace around the cylindrical casing or a part thereof inside which a fluid at the required temperature (hot or cold depending on the circumstances) is circulated. The application of electrical resistances, insulation of the tank and other alternatives of this kind are also possible, however.

Finally, it must be remembered how also the use of the tank according to the invention, which in this description relates mainly to the wine-making sector, may also be of a different nature; consequently it also possible that some adaptive modifications may be made depending on the use of the tank in other areas, such as for example for oil, fruit juice or other alimentary liquids.

All these variations, however, fall within the scope of the claims which follow.

## Claims

1. Tank for fluids, in particular liquids in which solid bodies are suspended, comprising a cylindrical casing (2) with a horizontal axis, one or more valves (6, 7) for draining the fluid, a rotating shaft (20) coaxial with the casing on which members (23) designed to cause remixing of the fluid following rotation of the shaft are mounted, means (8, 24) for removing the solid bodies which are deposited on the bottom of the tank after drainage of the fluid, **characterized in that** the mixer members (23) are configured in the manner of folding strips attached to the shaft (20) so as to be able to fold around it and **in that** the means for removing the solid bodies also comprise scraper members (24) formed by a rod (24a) which extends transversely with respect to the shaft opposite a respective mixer member, at the free end of which a curved support (24b) for a brush (24c) is mounted, said brush being inclined with respect to the generatrices of the cylindrical casing and making sliding contact therewith.

2. Tank according to Claim 1, wherein the mixer members (23) are formed by a plurality of panels (23a, 23b) which are aligned and hinged together so as to form the abovementioned folding strips.

3. Tank according to Claims 1 and 2, wherein the means for removal of the solid bodies comprise a collection channel (8) which is arranged underneath the cylindrical casing (2) and towards which these bodies are conveyed by the scraper members (24) following rotation of the shaft (20).

4. Tank according to any one of Claims 1 to 3, wherein the shaft (20) has a polygonal cross-section and wherein pairs of mixer members (23) and associated scraper members (24) are attached thereto along flat surfaces defined by this polygonal cross-section.

5. Tank according to Claim 4, wherein the polygonal cross-section of the shaft (20) is square or rectangular and wherein the rods (24a) of the scraper members (24) are arranged staggered at 90° with respect to each other.

6. Tank according to any one of Claims 1 to 5, wherein an interspace for the passage of fluids intended to heat or cool the tank is provided around the cylindrical casing (2) or at least a part thereof.

7. Tank according to any one of Claims 1 to 6, wherein the cylindrical casing (2) is insulated.

8. Grape fermenter comprising a tank according to any one of Claims 1 to 7.

## Patentansprüche

1. Behälter für Fluide, insbesondere für Flüssigkeiten, in denen feste Körper suspendiert sind, welcher ein zylindrisches Gehäuse (2) mit einer horizontalen Achse, eines oder mehrere Ventile (6, 7) zum Ablassen des Fluides, eine rotierende Welle (20), die koaxial mit dem Gehäuse angeordnet ist und auf welcher Bauteile (23), die gestaltet sind, so dass sie, der Rotation der Welle folgend, ein Durchmischen des Fluides veranlassen, befestigt sind, und Mittel (8, 24) zum Entfernen der festen Körper, die sich auf dem Grund des Behälters nach Auslassen des Fluides absetzen, aufweist, **dadurch gekennzeichnet, daß** die Mischerbauteile (23) in der Art von Faltstreifen, die an der Welle (20) befestigt sind, konfiguriert sind, so daß sie sich um sie falten können, und daß die Mittel zum Entfernen der festen Körper auch Abstreichbauteile (24) aufweisen, die aus einer Stange (24a), die sich relativ zu der Welle gegenüberliegend von einem zugehörigen Mischerbauteil quer erstreckt, gebildet werden und an deren freiem Ende eine gekrümmte Halterung (24b) für eine Bürste (24c) befestigt ist, wobei die Bürste bezüglich den Generatrizen des zylindrischen Gehäuses geneigt ist und mit diesen einen Gleitkontakt herstellt.

2. Behälter gemäß Anspruch 1, wobei die Mischerbauteile (23) durch eine Mehrzahl von Platten (23a, 23b), die zueinander ausgerichtet sind und schwenkbar aneinander angelenkt sind, so daß sie die oben genannten Faltstreifen bilden, gebildet werden.

3. Behälter gemäß den Ansprüchen 1 und 2, wobei die Mittel zum Entfernen der festen Körper einen Sammelkanal (8) aufweisen, der unterhalb des zylindrischen Gehäuses (2) angeordnet ist und zu welchem hin diese Körper durch die Abstreichbauteile (24), die der Rotation der Welle (20) folgen, gefördert werden.

4. Behälter gemäß einem der Ansprüche 1 bis 3, wobei die Welle (20) einen mehreckigen Querschnitt aufweist und wobei Paare aus Mischerbauteilen (23) und zugehörigen Abstreichbauteilen (24) an dieser entlang ebener Flächen, die durch diesen mehreckigen Querschnitt definiert werden, befestigt sind.

5. Behälter gemäß Anspruch 4, wobei der mehreckige Querschnitt der Welle (20) quadratisch oder rechtwinklig ist und wobei die Stangen (24a) der Abstreichbauteile (24) relativ zueinander um 90° gestaffelt angeordnet sind.

6. Behälter gemäß einem der Ansprüche 1 bis 5, bei dem ein Zwischenraum für den Durchgang von Fluiden, um den Behälter zu erwärmen oder zu kühlen, um das zylindrische Gehäuse (2) herum oder zumindest um einen Teil desselben vorgesehen ist.

7. Behälter gemäß einem der Ansprüche 1 bis 6, bei dem das zylindrische Gehäuse (2) isoliert ist.

8. Traubenfermenter, der einen Behälter gemäß einem der Ansprüche 1 bis 7 aufweist.

## Revendications

1. Réservoir pour fluides, en particulier des liquides dans lesquels des corps solides sont en suspension, comportant un boîtier cylindrique (2) avec un axe horizontal, une ou plusieurs soupapes (6, 7) pour évacuer le fluide, un arbre tournant (20) coaxial au boîtier sur lequel sont montés des éléments (23) destinés à brasser le fluide par suite de la rotation de l'arbre, des moyens (8, 24) pour retirer les corps solides qui sont déposés sur le fond du réservoir après évacuation du fluide, **caractérisé en ce que** les éléments de brassage (23) sont conformés à la manière de bandes pliables fixées à l'arbre (20) de façon à pouvoir se plier autour de lui et **en ce que** les moyens pour retirer les corps solides comportent aussi des organes de raclage (24) formés par une tige (24a) qui s'étend transversalement par rapport à l'arbre à l'opposé d'un élément de brassage respectif, à l'extrémité libre du quel est monté un support (24b) pour une brosse (24c), ladite brosse étant inclinée par rapport à la génératrice du boîtier cylindrique et formant un contact de glissement avec lui.

2. Réservoir selon la revendication 1, dans lequel les élément de brassage (23) sont formés par une pluralité de panneaux (23a, 23b) qui sont alignés et suspendis entre eux de façon à former les bandes pliables nommées précédemment.

3. Réservoir selon les revendications 1 et 2, dans lequel les moyens pour retirer les corps solides comprennent un canal collecteur (8) disposé au-dessous du boîtier cylindrique (2) et vers lequel ces corps solides sont amenés par les organes de raclage (24) par suite de la rotation de l'arbre (20).

4. Réservoir selon l'une des revendications 1 à 3, dans lequel l'arbre (20) a une section droite polygonale et dans lequel des paires d'éléments de brassage (23) et les organes de raclage associés (24) y sont attachés le long de surfaces planes définies par cette section polygonale.

5. Réservoir selon la revendication 4, dans lequel la section droite polygonale est carrée ou rectangulaire et dans lequel les tiges (24a) des organes de raclage (24) sont disposées avec un décalage de 90° les unes par rapport aux autres.

6. Réservoir selon l'une des revendications 1 à 5, dans lequel un intervalle pour le passage de fluides afin de réchauffer ou refroidir le réservoir est prévu autour du boîtier cylindrique (2) ou au moins une partie de celui-ci.

7. Réservoir selon l'une des revendications 1 à 6, dans lequel le boîtier cylindrique est isolé.

8. Cuve de fermentation de raisin comportant un réservoir selon l'une des revendications 1 à 7.
